# EUROPÄISCHE PATENTSCHRIFT

(11) **EP 3 661 801 B1**
(45) Veröffentlichungstag und Bekanntmachung des Hinweises auf die Patenterteilung: **07.04.2021**
(21) Anmeldenummer: 19768751.0
(22) Anmeldetag: 09.09.2019
(51) Int. Cl.: B60L 53/30, B60L 53/66, B60L 53/68, G06F 8/65, B60L 53/12, B60L 53/14

(54) **VERFAHREN ZUM STEUERN EINER LADESTATION ZUM LADEN VON FAHRZEUGEN SOWIE EINE LADESTATION UND EIN FAHRZEUG HIERFÜR**
METHOD FOR CONTROLLING A CHARGING STATION FOR CHARGING VEHICLES, CHARGING STATION AND VEHICLE THEREFOR
PROCÉDÉ DE CONTRÔLE D'UNE STATION DE CHARGE POUR CHARGER DES VÉHICULES, STATION DE CHARGE ET VÉHICULE

(30) Priorität: 05.10.2018 DE 102018007859
(43) Veröffentlichungstag der Anmeldung: 10.06.2020
(73) Patentinhaber: Daimler AG, 70372 Stuttgart (DE)
(72) Erfinder: WEIS, Stefan, 72649 Wolfschlugen (DE); SCHWILL, Christoph, 70178 Stuttgart (DE)
(74) Vertreter: JENSEN & SON
(86) Internationale Anmeldenummer: PCT/EP2019/073965
(87) Internationale Veröffentlichungsnummer: WO 2020/069820

(56) Entgegenhaltungen:
- EP-A1- 2 819 265
- WO-A1-2013/115428
- DE-A1-102015 208 786
- US-A1- 2013 214 738

## Beschreibung

Die Erfindung betrifft ein Verfahren zum Steuern einer Ladestation zum Laden von Fahrzeugen nach dem Oberbegriff des Anspruchs 1. Die Erfindung betrifft ferner die entsprechend ausgestaltete Ladestation und das entsprechend ausgestaltete Fahrzeug. Elektrisch betriebene Fahrzeuge müssen regelmäßig geladen werden. Dazu können die jeweiligen Fahrzeuge mit einer Ladestation stromübertragend gekoppelt und aufgeladen werden. Damit das Laden der jeweiligen Fahrzeuge reibungslos ablaufen kann, müssen die Software des Fahrzeugs und die Software der Ladestation miteinander kompatibel sein. Da die Ladestationen aus Sicherheitsgründen über keine Internetverbindung verfügen, muss deren Software von dem Inhaber manuell aktualisiert werden. Ist die Software der Ladestation mit der Software des Fahrzeugs nicht mehr kompatibel, so kann kein Fahrzeug an der Ladestation mehr geladen werden. Die Ladestation muss in diesem Fall aufwendig auf den neuesten Stand gebracht und in seltenen Fällen sogar an den Hersteller zum Updaten gesendet werden. US2013/214738A1 offenbart ein Verfahren zum Steuern einer Ladestation zum Laden von Fahrzeugen, gemäss dem Stand der Technik.

Die Aufgabe der Erfindung ist es daher, ein Verfahren zum Steuern einer Ladestation zu verbessern oder zumindest alternativ auszugestalten. Insbesondere soll dabei ein Ausfall der Ladestation infolge einer nicht aktuellen Software verhindert werden. Die weitere Aufgabe der Erfindung ist es, eine zum Ausführen des Verfahrens geeignete Ladestation und ein zum Ausführen des Verfahrens geeignetes Fahrzeug bereitzustellen.

Aufgabe der Erfindung ist es, eine zum Ausführen des Verfahrens geeignete Ladestation und ein zum Ausführen des Verfahrens geeignetes Fahrzeug bereitzustellen.

Diese Aufgaben werden erfindungsgemäß durch den Gegenstand der unabhängigen Ansprüche gelöst. Vorteilhafte Ausführungsformen sind Gegenstand der abhängigen Ansprüche.

In einem Verfahren zum Steuern einer Ladestation zum Laden von Fahrzeugen wird beim Laden der jeweiligen Fahrzeuge eine erste Ladeeinheit der Ladestation mit einer zweiten Ladeeinheit des jeweiligen Fahrzeugs stromübertragend gekoppelt. Erfindungsgemäß wird beim Laden eines der jeweiligen Fahrzeuge ein Updatevorgang der Ladestation durchgeführt, bei dem eine Steuerungsanordnung des einen Fahrzeugs ein aktuelles Softwarepaket an eine Steuerungseinrichtung der Ladestation übermittelt. In der vorliegenden Erfindung werden Begriffe "die jeweiligen Fahrzeuge" und "das jeweilige Fahrzeug" und die Begriffe "eines der Fahrzeuge" und "das eine Fahrzeug" unterschieden. Der Begriff "die jeweiligen Fahrzeuge" bezieht sich dabei auf alle Fahrzeuge, die jemals mit der Ladestation zum Laden stromübertragend gekoppelt wurden. Ist nur von einem dieser Fahrzeuge die Rede, so wird der Begriff "das jeweilige Fahrzeug" verwendet. Die Begriffe "eines der Fahrzeuge" und "das eine Fahrzeug" beziehen sich dagegen auf eines der wenigen Fahrzeuge, die mit der Ladestation zum Laden stromübertragend gekoppelt werden und dabei das Softwarepaket an die Ladestation übermitteln.

Die erste Ladeeinheit und die zweite Ladeeinheit können in dem erfindungsgemäßen Verfahren sowohl kontaktlos als auch per Kabel miteinander stromübertragend gekoppelt werden. Das Verfahren kann folglich sowohl an der Ladestation zum induktiven Laden von Fahrzeugen als auch an einer Ladestation zum Laden von Fahrzeugen per Kabel ausgeführt werden. Entsprechend kann bei der Ladestation zum induktiven Laden die erste Ladeeinheit eine Primärspule sein, die mit der zweiten Ladeeinheit des jeweiligen Fahrzeugs in Form einer Sekundärspule stromübertragend induktiv koppelbar ist. Bei der Ladestation zum Laden von Fahrzeugen per Kabel kann die erste Ladeeinheit eine Steckdose oder ein Stecker sein, die oder der mit der zweiten Ladeeinheit des jeweiligen Fahrzeugs in Form eines Steckers oder einer Steckdose per Kabel stromübertragend koppelbar ist. Entsprechend kann das jeweilige Fahrzeug die zweite Ladeeinheit in Form der Sekundärspule zum induktiven Laden an der Ladestation oder in Form des Steckers oder der Steckdose zum Laden an der Ladestation per Kabel aufweisen. Beim Laden können dabei die Steuerungsanordnung des jeweiligen Fahrzeugs und die Steuerungseinrichtung der Ladestation das Laden überwachen.

Vorteilhafterweise kann der Updatevorgang der Ladestation durch die Steuerungsanordnung eines der Fahrzeuge und somit nach Bedarf durchgeführt werden, so dass auf eine manuelle Aktualisierung durch den Inhaber der Ladestation verzichtet werden kann. Ferner ermöglicht das erfindungsgemäße Verfahren eine zeitnahe Aktualisierung der Ladestation, so dass die Ladestation überwiegend auf dem aktuellsten Stand ist. Dadurch können das Laden der jeweiligen Fahrzeuge optimiert und beim Laden aufgrund abweichender Softwareversionen entstehende Stromverluste reduziert werden. Ferner findet der Updatevorgang der Ladestation ohne eine direkte Internetverbindung statt, so dass die Ladestation weiterhin optimal geschützt ist. Vorteilhafterweise kann vorgesehen sein, dass beim Laden des jeweiligen Fahrzeugs die Aktualität einer abgespeicherten Software der Ladestation überprüft wird und bei einer nicht aktuellen abgespeicherten Software der Updatevorgang gestartet wird. Beim Überprüfen der abgespeicherten Software der Ladestation kann dabei über deren Aktualität beispielweise anhand eines Zeitpunkts des letzten Updatevorgangs und/oder einer Softwareversion der abgespeicherten Software entschieden werden. Ist die abgespeicherte Software nicht mehr aktuell, so kann der Updatevorgang gestartet und das aktuelle Softwarepaket an die Steuerungseinrichtung der Ladestation übermittelt werden. Ist die abgespeicherte Software aktuell, so kann das Laden ohne den Updatevorgang fortgesetzt werden. Zweckgemäß wird die Aktualität der abgespeicherten Software beim Laden aller der jeweiligen Fahrzeuge überprüft und der Updatevorgang der Ladestation nach Bedarf durch die Steuerungsanordnung eines der Fahrzeuge durchgeführt.

Vorteilhafterweise kann vorgesehen sein, dass beim Updatevorgang das aktuelle Softwarepaket für die Ladestation an die Steuerungsanordnung des einen Fahrzeugs aus einem externen Speicherplatz übertragen wird. Der externe Speicherplatz kann beispielweise eine Datenbank sein, in der das aktuelle Softwarepaket zum Herunterladen durch die Steuerungsanordnung bereitgestellt wird. Das Starten des Updatevorgangs und damit das Übertragen des aktuellen Softwarepakets können zweckgemäß anhängig von der Aktualität der abgespeicherten Software der Ladestation stattfinden. Zudem kann das aktuelle Softwarepaket für die Ladestation beim Updatevorgang von der Steuerungsanordnung des einen Fahrzeugs über ein erstes Kommunikationsmodul der Steuerungsanordnung mittels einer Datenverbindung drahtlos empfangen werden. Das erste Kommunikationsmodul kann zum Empfangen und zum Senden von Daten nach einem standardisierten Übertragungsprotokoll ausgelegt sein. Das Übertragungsprotokoll kann beispielweise ein Übertragungsprotokoll nach einem GSM- beziehungsweise 2G-Standard (GSM: Global System for Mobile Communications) oder nach einem UTMSbeziehungsweise 3G-Standard (UTMS: Universal Mobile Telecommunications System) oder nach einem LTE- beziehungsweise 4G-Standard (LTE: Long Term Evolution) oder nach einem sogenannten Bluetooth-Standard gemäß IEEE 802.15.1 oder nach einem anderen Standard sein. Die Datenverbindung ist dabei bevorzugt nach einem Internetsicherheitsstandard gesichert, um die Ladestation zu schützen. Vorteilhafterweise kann das erste Kommunikationsmodul eine entsprechend ausgestaltete Antenne zum Empfangen und zum Senden von Daten aufweisen.

Vorteilhafterweise kann beim Updatevorgang die Steuerungsanordnung des einen Fahrzeugs das aktuelle Softwarepaket an die Steuerungseinrichtung der Ladestation über ein zweites Kommunikationsmodul der Steuerungsanordnung drahtlos oder per Kabel übermitteln. Dabei kann das zweite Kommunikationsmodul beispielweise das aktuelle Softwarepaket an die Steuerungseinrichtung der Ladestation über eine Antenne mittels einer Datenverbindung übermitteln. Die Antenne des zweiten Kommunikationsmoduls ist dann zum Empfangen und zum Senden von Daten nach einem standardisierten Übertragungsprotokoll ausgelegt. Das Übertragungsprotokoll kann beispielweise ein Übertragungsprotokoll nach einem GSM- beziehungsweise 2G-Standard (GSM: Global System for Mobile Communications) oder nach einem UTMS- beziehungsweise 3G-Standard (UTMS: Universal Mobile Telecommunications System) oder nach einem LTEbeziehungsweise 4G-Standard (LTE: Long Term Evolution) oder nach einem sogenannten Bluetooth-Standard gemäß IEEE 802.15.1 oder nach einem sogenannten WiFi-Standard gemäß IEEE-802.11 oder nach einem anderen Standard sein. Die Datenverbindung ist dabei bevorzugt nach einem Internetsicherheitsstandard gesichert, um die Ladestation zu schützen. Vorteilhafterweise kann die Steuerungseinrichtung eine entsprechend ausgestaltete Antenne zum Empfangen und zum Senden von Daten an und von der Antenne des zweiten Kommunikationsmoduls aufweisen. Alternativ kann das zweite Kommunikationsmodul das aktuelle Softwarepaket an die Steuerungseinrichtung der Ladestation über einen Datenkabel mittels einer standardisierten Datenverbindung übermitteln. Die standardisierte Datenverbindung kann beispielweise eine USB-Datenverbindung (USB: Universal Serial Bus) sein. Alternativ kann das zweite Kommunikationsmodul das aktuelle Softwarepaket an die Steuerungseinrichtung der Ladestation über die stromführende Verbindung der ersten Ladeeinheit mit der zweiten Ladeeinheit übermitteln. Dazu kann beispielsweise das aktuelle Softwarepaket durch eine Strommodulation von dem zweiten Kommunikationsmodul an die Steuerungseinrichtung der Ladestation übertragen werden.

Erfindungsgemäß ist vorgesehen, dass beim Updatevorgang in dem aktuellen Softwarepaket für die Ladestation eine aktuelle Software vollständig oder ein Änderungspaket einer aktuellen Software übertragen wird. Die Steuerungseinrichtung der Ladestation kann dann beim Updatevorgang aus dem aktuellen Softwarepaket die abgespeicherte Software auf die aktuelle Software aktualisieren. Sobald die abgespeicherte Software in der Ladestation auf die aktuelle Software aktualisiert wurde, ist nun die aktuelle Software die auf der Ladestation abgespeicherte Software. Wird in dem aktuellen Softwarepaket die aktuelle Software vollständig übertragen, so findet das Aktualisieren der abgespeicherten Software auf dem bekannten Wege durch ein Überschreiben statt. Wird in dem aktuellen Softwarepaket das Änderungspaket der aktuellen Software übertragen, so findet das Aktualisieren der abgespeicherten Software durch ein sogenanntes Flashen statt, bei dem nur zu aktualisierenden Bestandteile der abgespeicherten Software aktualisiert beziehungsweise überschrieben werden.

Bei einem vorteilhaften Ausführen des erfindungsgemäßen Verfahrens kann vorgesehen sein, dass beim Laden des jeweiligen Fahrzeugs die Steuerungsanordnung des jeweiligen Fahrzeugs der abgespeicherten Software der Ladestation entsprechende Statusdaten an eine externe Datenbank übermittelt. Die übermittelten Statusdaten der Ladestation werden dann in der Datenbank gespeichert und die Aktualität und/oder die Kompatibilität der abgespeicherten Software werden anhand der in der Datenbank abgespeicherten Statusdaten der Ladestation überwacht. Die Datenbank stellt somit einen externen Speicher bereit, in welchem unabhängig von dem Standort der Ladestation und ihren Zugänglichkeit die aktuellen Statusdaten gesammelt werden. Die Statusdaten werden dabei beim Laden aller der jeweiligen Fahrzeuge übermittelt, so dass in der Datenbank stets die aktuellsten Statusdaten vorliegen. Anhand dieser Statusdaten können dann die Aktualität und/oder die Kompatibilität überwacht werden. Die Aktualität gibt dabei an, ob bereits eine aktuelle Software vorliegt, auf die die abgespeicherte Software der Ladestation noch nicht aktualisiert wurde. Die Kompatibilität gibt dabei an, ob die abgespeicherte Software der Ladestation mit einer Software beliebiger aufzuladender Fahrzeuge kompatibel ist. Bei einer fehlenden Kompatibilität kann kein Laden der jeweiligen Fahrzeuge an der Ladestation mehr vorgenommen werden. Das derart ausführbare Verfahren ist insbesondere bei nur periodisch oder länger nicht genutzten Ladestationen - wie beispielweise bei einer Ladestation in einem Sommerhaus oder in einem kleinen Hotel - vorteilhaft.

Beim Überwachen der Aktualität und/oder der Kompatibilität können die zeitlich später in der Datenbank abgespeicherten Statusdaten der Ladestation die zeitlich früher in der

Datenbank abgespeicherten Statusdaten der Ladestation ersetzen. Auf diese vorteilhafte Weise werden die aktuelleren Statusdaten bei der Auswertung bevorzugt und die Aktualität und/oder die Kompatibilität können zuverlässig überwacht werden. Vorteilhafterweise können mit den Statusdaten ein Zeitpunkt des letzten Updatevorgangs und/oder eine Softwareversion und/oder ein Ladungsdurchsatz des letzten Ladens und/oder ein Zeitpunkt des letzten Ladens übermittelt werden. Der Zeitpunkt des letzten Updatevorgangs und/oder die Softwareversion und/oder der Zeitpunkt des letzten Ladens können dabei zum Überwachen der Aktualität und/oder der Kompatibilität genutzt werden. Der Ladungsdurchsatz des letzten Ladens kann als eine zusätzliche nützliche Information für den Inhaber der Ladestation genutzt werden.

Um den Inhaber der Ladestation über die Aktualität und/oder über die Kompatibilität der Ladestation informieren zu können, kann in dem Verfahren eine Warnmeldung generiert werden, sobald die abgespeicherte Software der Ladestation nicht mehr aktuell ist. In der Warnmeldung können beispielweise die zuletzt in der Datenbank gespeicherten Statusdaten übermittelt werden. Die Warnmeldung kann beispielweise generiert werden, wenn die abgespeicherte Software der Ladestation beim Vorliegen einer aktuellen Software nach einem vorbestimmten Zeitintervall nicht aktualisiert wurde. Alternativ oder zusätzlich kann eine Warnmeldung für den Inhaber der Ladestation generiert werden, sobald die abgespeicherte Software der Ladestation mit einer Software beliebiger aufzuladender Fahrzeugen nach einem kurzen Zeitabschnitt inkompatibel werden kann. Anhand der Warnmeldung kann der Inhaber vor einem Ausfallen beziehungsweise vor einem sogenannten Dead-Look der Ladestation diese aktualisieren, wodurch Kosten und Aufwand bei einer ausgefallenen Ladestation vermieden werden. Insbesondere bei nur periodisch oder länger nicht genutzten Ladestationen - wie beispielweise bei einer Ladestation in einem Sommerhaus oder in einem kleinen Hotel - kann das Verfahren vorteilhaft sein.

Vorteilhafterweise kann vorgesehen sein, dass die Warnmeldung an den Inhaber der Ladestation über eine Anwendungssoftware und/oder über eine Anwendungssoftware für Mobilgeräte und/oder über eine Steuerungsanordnung eines durch den Inhaber definierten Fahrzeugs übermittelt wird. Dabei kann die Anwendungssoftware beispielweise ein E-Mail-Server sein, an den die Warnmeldung in Form einer E-Mail übermittelt wird. Die Anwendungssoftware für Mobilgeräte kann beispielweise eine speziell dafür vorgesehene Anwendungssoftware für ein Mobiltelefon oder für einen Tabletcomputer oder für ein anderes mobiles Gerät sein. Ferner kann die Steuerungsanordnung des durch den Inhaber definierten Fahrzeugs zum Anzeigen der Warnmeldung verwendet werden. Dabei kann der Inhaber der Ladestation beispielweise sein eigenes Fahrzeug - auch wenn das Fahrzeug zum Laden an der Ladestation nicht ausgestaltet ist - dazu definieren und die Warnmeldung beispielweise an einem mit der Steuerungsanordnung des definierten Fahrzeugs gesteuerten Monitor anzeigen lassen. Alternativ oder zusätzlich können die Statusdaten der Ladestation in der Datenbank für den Inhaber zum Abrufen bereitgestellt werden. In diesem Fall kann der Inhaber der Ladestation zu jedem beliebigen Zeitpunkt die Statusdaten der Ladestation abrufen und die Ladestation dadurch überwachen. Alternativ kann der Inhaber der Ladestation auch über das die Datenbank bedienende Personal kontaktiert und die Warnmeldung über einen persönlichen Kontakt mit dem Inhaber an diesen übermittelt werden.

Zum Übermitteln der Statusdaten der Ladestation an die Datenbank kann vorgesehen sein, dass die Steuerungsanordnung des jeweiligen Fahrzeugs die der abgespeicherten Software der Ladestation entsprechenden Statusdaten der Ladestation an die Datenbank über ein erstes Kommunikationsmodul mittels einer Datenverbindung drahtlos übermittelt. Das erste Kommunikationsmodul ist dabei bevorzugt zum Empfangen und zum Senden von Daten nach einem standardisierten Übertragungsprotokoll ausgelegt. Das erste Kommunikationsmodul zum Senden der Statusdaten kann hier dasselbe Kommunikationsmodul wie zum Empfangen des aktuellen Softwarepakets für die Ladestation beim Updatevorgang sein. Das Übertragungsprotokoll kann beispielweise ein Übertragungsprotokoll nach einem GSM- beziehungsweise 2G-Standard (GSM: Global System for Mobile Communications) oder nach einem UTMS- beziehungsweise 3G-Standard (UTMS: Universal Mobile Telecommunications System) oder nach einem LTEbeziehungsweise 4G-Standard (LTE: Long Term Evolution) oder nach einem sogenannten Bluetooth-Standard gemäß IEEE 802.15.1 oder nach einem anderen Standard sein. Die Datenverbindung ist dabei bevorzugt nach einem Internetsicherheitsstandard gesichert, um die Ladestation zu schützen. Vorteilhafterweise kann das erste Kommunikationsmodul eine entsprechend ausgestaltete Antenne zum Empfangen und zum Senden von Daten aufweisen.

Zusammenfassend kann in dem erfindungsgemäßen Verfahren der Aufwand zum Durchführen des Updatevorgangs an der Ladestation deutlich reduziert werden. Insbesondere kann der Updatevorgang der Ladestation nach Bedarf durch die Steuerungsanordnung eines der Fahrzeuge durchgeführt werden, so dass auf eine manuelle Aktualisierung durch den Inhaber der Ladestation verzichtet werden kann. Ferner ermöglicht das erfindungsgemäße Verfahren eine zeitnahe Aktualisierung der Ladestation und die Ladestation befindet sich dadurch überwiegend auf dem aktuellsten Stand. In dem Verfahren können zusätzlich die Aktualität und/oder die Kompatibilität der Ladestation überwacht werden, wodurch ein Ausfall der Ladestation verhindert werden kann. Insbesondere kann die Aktualität und/oder die Kompatibilität der Ladestation unabhängig von ihrem Standort und ihrer Zugänglichkeit einfach und inhaberfreundlich überwacht werden.

Die Erfindung betrifft auch eine Ladestation zum Laden von Fahrzeugen. Die Ladestation weist dabei eine erste Ladeeinheit auf, die mit einer zweiten Ladeeinheit des jeweiligen Fahrzeugs stromübertragend koppelbar ist. Zudem kann die Ladestation eine Steuerungseinrichtung aufweisen, die beim Laden des jeweiligen Fahrzeugs das Laden überwachen kann. Erfindungsgemäß ist die Steuerungseinrichtung der Ladestation zum Ausführen des oben beschriebenen Verfahrens ausgelegt. Die Ladestation kann zum induktiven Laden von Fahrzeugen ausgelegt sein. Dabei ist die erste Ladeeinheit der Ladestation eine Primärspule, die mit der zweiten Ladeeinheit des jeweiligen Fahrzeugs in Form einer Sekundärspule stromübertragend induktiv koppelbar ist. Alternativ kann die Ladestation zum Laden von Fahrzeugen per Kabel ausgelegt sein. Dabei ist die erste Ladeeinheit der Ladestation eine Steckdose oder ein Stecker, die oder der mit der zweiten Ladeeinheit des jeweiligen Fahrzeugs in Form eines Steckers oder einer Steckdose per Kabel stromübertragend koppelbar ist.

Die Erfindung betrifft auch ein Fahrzeug mit einem elektrisch aufladbaren Energiespeicher. Das Fahrzeug weist dabei eine zweite Ladeeinheit auf, die mit einer ersten Ladeeinheit der Ladestation zum Laden des Energiespeichers stromübertragend koppelbar ist. Erfindungsgemäß ist eine Steuerungsanordnung des Fahrzeugs zum Ausführen des oben beschriebenen Verfahrens ausgelegt. Die Steuerungsanordnung des Fahrzeugs kann beispielweise ein erstes Kommunikationsmodul und/oder ein zweites Kommunikationsmodul aufweisen. Ferner kann die Steuerungsanordnung auch das Laden des jeweiligen Fahrzeugs überwachen.

Das erste Kommunikationsmodul kann beispielweise zum drahtlosen Senden und zum drahtlosen Empfangen von Daten nach einem standardisierten Übertragungsprotokoll mittels einer Datenverbindung ausgelegt sein. Das Übertragungsprotokoll kann beispielweise ein Übertragungsprotokoll nach einem GSM- beziehungsweise 2G-Standard (GSM: Global System for Mobile Communications) oder nach einem UTMSbeziehungsweise 3G-Standard (UTMS: Universal Mobile Telecommunications System) oder nach einem LTE- beziehungsweise 4G-Standard (LTE: Long Term Evolution) oder nach einem sogenannten Bluetooth-Standard gemäß IEEE 802.15.1 oder nach einem anderen Standard sein. Die Datenverbindung ist dabei bevorzugt nach einem Internetsicherheitsstandard gesichert. Das erste Kommunikationsmodul kann in dem oben beschriebenen Verfahren zum drahtlosen Empfangen des aktuellen Softwarepakets für die Ladestation beim Updatevorgang sowie zum drahtlosen Senden der der abgespeicherten Software der Ladestation entsprechenden Statusdaten an die Datenbank eingesetzt werden. Vorteilhafterweise kann das erste Kommunikationsmodul eine entsprechend ausgestaltete Antenne zum Empfangen und zum Senden von Daten aufweisen.

Das zweite Kommunikationsmodul kann beispielweise eine Antenne aufweisen, die zum Empfangen und zum Senden von Daten nach einem standardisierten Übertragungsprotokoll ausgelegt ist. Das Übertragungsprotokoll kann beispielweise ein Übertragungsprotokoll nach einem GSM- beziehungsweise 2G-Standard (GSM: Global System for Mobile Communications) oder nach einem UTMS- beziehungsweise 3G-Standard (UTMS: Universal Mobile Telecommunications System) oder nach einem LTEbeziehungsweise 4G-Standard (LTE: Long Term Evolution) oder nach einem sogenannten Bluetooth-Standard gemäß IEEE 802.15.1 oder nach einem WiFi-Standard gemäß IEEE-802.11 oder nach einem anderen Standard sein. Die Datenverbindung ist dabei bevorzugt nach einem Internetsicherheitsstandard gesichert. Alternativ kann das zweite Kommunikationsmodul ein Datenkabel zum Übermitteln von Daten mittels einer standardisierten Datenverbindung aufweisen. Die standardisierte Datenverbindung kann beispielweise eine USB-Datenverbindung (USB: Universal Serial Bus) sein. Alternativ kann das zweite Kommunikationsmodul zum Übermitteln von Daten durch eine stromführende Verbindung zwischen den beiden Ladeeinheiten ausgelegt sein. Das zweite Kommunikationsmodul kann in dem oben beschriebenen Verfahren zum Senden des aktuellen Softwarepakets an die Ladestation beim Updatevorgang sowie zum Empfangen der der abgespeicherten Software der Ladestation entsprechenden Statusdaten eingesetzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen:
- Fig. 1: eine Ansicht eines erfindungsgemäßen Fahrzeugs beim Laden an einer erfindungsgemäßen Ladestation;
- Fig. 2: ein Kommunikationsschema in einem erfindungsgemäßen Verfahren.

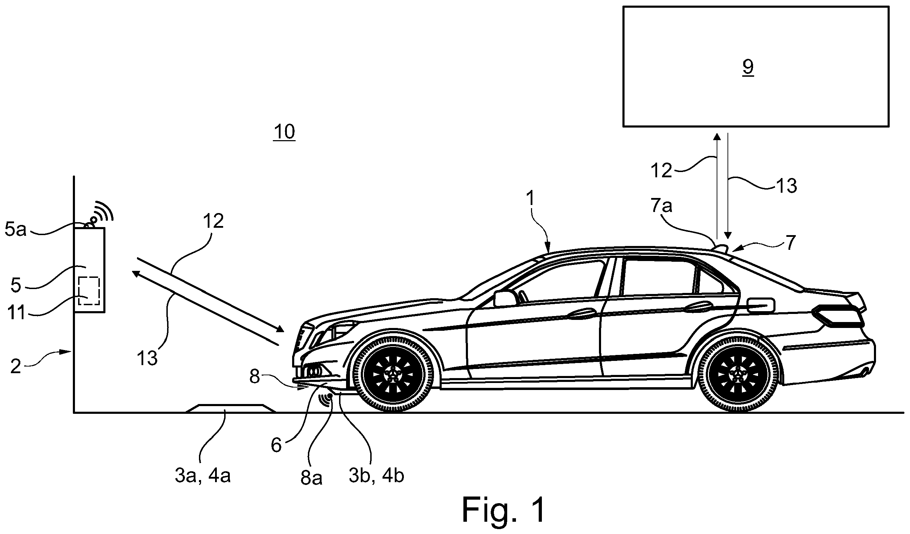

Fig. 1 zeigt eine Ansicht eines erfindungsgemäßen Fahrzeugs 1 beim Laden an einer erfindungsgemäßen Ladestation 2. Die Ladestation 2 weist dabei eine erste Ladeeinheit 3a auf, die mit einer zweiten Ladeeinheit 3b des jeweiligen Fahrzeugs 1 stromübertragend koppelbar ist. In diesem Ausführungsbeispiel ist die Ladestation 1 zum induktiven Laden ausgelegt und die erste Ladeeinheit 3a der Ladestation 2 ist eine Primärspule 4a. Entsprechend ist die zweite Ladeeinheit 3a des Fahrzeugs 1 eine Sekundärspule 4b, die mit der Primärspule 4a der Ladestation stromübertragend induktiv koppelbar ist. Zudem weist die Ladestation 2 eine Steuerungseinrichtung 5 mit einer Antenne 5a auf. Das Fahrzeug 1 weist eine Steuerungsanordnung 6 auf, die ein erstes Kommunikationsmodul 7 mit einer Antenne 7a und ein zweites Kommunikationsmodul 8 mit einer Antenne 8a aufweist. In diesem Ausführungsbeispiel ist die Antenne 7a zum Senden und zum Empfangen von Daten nach einem gemäß dem GSM- beziehungsweise 2G-Standard standardisierten Übertragungsprotokoll ausgelegt und kann Daten mittels einer nach einem Internetsicherheitsstandard gesicherten Datenverbindung mit einer externen Datenbank 9 austauschen. Die Antenne 5a und die Antenne 8a sind zum Senden und zum Empfangen von Daten nach einem gemäß des WiFi-Standards nach IEEE-802.11 standardisierten Übertragungsprotokoll ausgelegt. Die Antenne 5a und die Antenne 8a können Daten mittels einer nach einem Internetsicherheitsstandard gesicherten Datenverbindung miteinander austauschen und verbinden dadurch die Steuerungseinrichtung 5 und die Steuerungsanordnung 6 datenübertragend miteinander.

Die Ladestation 2 wird in einem erfindungsgemäßen Verfahren 10 gesteuert. Dabei wird beim Laden des jeweiligen Fahrzeugs 1 die erste Ladeeinheit 3a der Ladestation 2 mit der zweiten Ladeeinheit 3b des jeweiligen Fahrzeugs 1 stromübertragend gekoppelt. Beim Laden ruft die Steuerungsanordnung 6 des jeweiligen Fahrzeugs 1 einer abgespeicherten Software 11 der Ladestation 2 entsprechende Statusdaten 12 der Ladestation 2 ab und übermittelt diese an die Datenbank 9. Mit durchgezogenen Pfeilen ist hier das Übermitteln der entsprechenden Daten in dem Verfahren 10 angedeutet. In der Datenbank 9 werden die Statusdaten 12 gespeichert und die Aktualität und/oder die Kompatibilität der abgespeicherten Software 11 überwacht. Die Datenbank 9 stellt auf diese Weise einen externen Speicher bereit, in dem unabhängig von dem Standort der Ladestation 2 und ihrer Zugänglichkeit die aktuellen Statusdaten 12 gesammelt werden. Die Statusdaten 12 werden dabei beim Laden jedes der jeweiligen Fahrzeuge 1 übermittelt, so dass in der Datenbank 9 die aktuellsten Statusdaten 12 zu der jeweiligen Ladestation 2 vorliegen.

Beim Laden des jeweiligen Fahrzeugs 1 können die übermittelten Statusdaten 12 der Ladestation 2 zusätzlich in der Datenbank 9 oder auch durch die Steuerungsanordnung 6 des jeweiligen Fahrzeugs 1 auf die Aktualität überprüft werden. Über die Aktualität der Statusdaten 12 kann beispielweise anhand eines Zeitpunkts des letzten Updatevorgangs und/oder einer Softwareversion der abgespeicherten Software 11 entschieden werden. Bei einer nicht aktuellen abgespeicherten Software 11 kann dann ein Updatevorgang gestartet werden und ein aktuelles Softwarepaket 13 an die Steuerungsanordnung 6 übermittelt werden. Über die datenübertragende Verbindung zwischen der Steuerungseinrichtung 5 und der Steuerungsanordnung 6 kann dann das aktuelle Softwarepaket 13 an die Steuerungseinrichtung 5 der Ladestation 2 übermittelt werden. Die Steuerungsanordnung 5 aktualisiert dann die abgespeicherte Software 11 auf eine dem aktuellen Softwarepaket 13 entsprechende Software. Ist die abgespeicherte Software 11 aktuell, so kann das Laden ohne den Updatevorgang fortgesetzt werden. Der Updatevorgang der Ladestation 2 wird nach Bedarf von einem der Fahrzeuge 1 durchgeführt, so dass auf eine manuelle Aktualisierung durch den Inhaber der Ladestation 2 verzichtet werden kann. Ferner kann eine zeitnahe Aktualisierung der Ladestation 2 erfolgen, so dass die Ladestation 2 überwiegend auf dem aktuellsten Stand ist. Insbesondere können dadurch das Laden der jeweiligen Fahrzeuge 1 optimiert und beim induktiven Laden entstehende Stromverluste reduziert werden. Ferner findet der Updatevorgang der Ladestation 2 ohne eine direkte Internetverbindung statt, so dass die Ladestation 2 optimal geschützt ist.

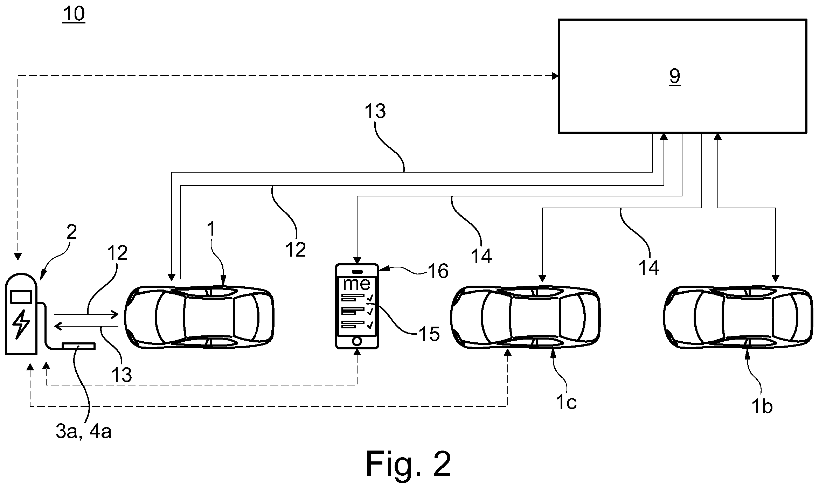

Fig. 2 zeigt nun ein Kommunikationsschema in dem erfindungsgemäßen Verfahren 10. Wie mit durchgezogenen Pfeilen angedeutet, werden beim Laden des jeweiligen Fahrzeugs 1 an der Ladestation 2 die aktuellen Statusdaten 12 an die Datenbank 9 übermittelt. Wird der Updatevorgang der Ladestation 2 durchgeführt, so wird zudem das aktuelle Softwarepaket 13 an die Ladestation 2 übermittelt. Die Datenübertragung zwischen der Ladestation 2 und der Datenbank 9 findet dabei über das jeweilige Fahrzeug 1 statt. Zwischen der Ladestation 2 und der Datenbank 9 wird dadurch eine virtuelle Datenverbindung erzeugt, wie mit durchbrochenen Pfeilen angedeutet ist. Nach dem Abspeichern der Statusdaten 12 in der Datenbank 9 werden diese auf die Aktualität und/oder die Kompatibilität überwacht. Die Aktualität gibt dabei an, ob bereits eine aktuelle Software vorliegt, auf die die abgespeicherte Software 11 der Ladestation 2 noch nicht aktualisiert wurde. Die Kompatibilität gibt dabei an, ob die abgespeicherte Software 11 der Ladestation 2 mit einer Software aufzuladender beliebiger Fahrzeuge 1b kompatibel ist. Bei einer fehlenden Kompatibilität kann kein Laden der aufzuladenden beliebigen Fahrzeuge 1b an der Ladestation 2 mehr vorgenommen werden.
Um den Inhaber der Ladestation 2 über die Aktualität und/oder über die Kompatibilität der Ladestation 2 informieren zu können, wird in dem Verfahren 10 eine Warnmeldung 14 für den Inhaber der Ladestation 2 generiert. Diese wird an den Inhaber der Ladestation 2 übermittelt, sobald die abgespeicherte Software 11 der Ladestation 2 nicht mehr aktuell ist und/oder mit einer Software der aufzuladenden beliebigen Fahrzeuge 1b nach einem kurzen Zeitabschnitt inkompatibel werden kann. In der Warnmeldung 14 können zusätzlich die zuletzt in der Datenbank 9 gespeicherten Statusdaten 12 oder auch andere Informationen übermittelt werden. Anhand der Warnmeldung 14 kann der Inhaber vorgewarnt werden und die Ladestation 2 aktualisieren. Dadurch kann ein Ausfallen beziehungsweise ein sogenanntes Dead-Look der Ladestation 2 verhindert werden. Die Warnmeldung 14 kann an den Inhaber der Ladestation 2 über eine Anwendungssoftware 15 für ein Mobilgerät 16 und/oder über eine Steuerungsanordnung eines durch den Inhaber definierten Fahrzeugs 1c - beispielweise seines eigenen Fahrzeugs - übermittelt werden, wie mit durchgezogenen Pfeilen angedeutet ist. Auf diese Weise wird eine virtuelle Datenverbindung zwischen dem Mobilgerät 16 und der Ladestation 2 sowie zwischen dem Fahrzeug 1c und der Ladestation 2 erzeugt, wie mit durchbrochenen Pfeilen angedeutet ist. Alternativ oder zusätzlich können die Statusdaten 12 der Ladestation 2 in der Datenbank 9 für den Inhaber zum Abrufen bereitgestellt werden. In diesem Fall kann der Inhaber der Ladestation 2 zu jedem beliebigen Zeitpunkt die Statusdaten 12 der Ladestation 2 abrufen und die Ladestation 2 dadurch überwachen.

Zusammenfassend kann in dem erfindungsgemäßen Verfahren 10 der Aufwand zum Durchführen des Updatevorgangs an der Ladestation 2 deutlich reduziert werden. Insbesondere kann auf eine manuelle Aktualisierung der Ladestation 2 durch den Inhaber verzichtet und der Updatevorgang der Ladestation 2 durch die Steuerungsanordnung 6 des einen Fahrzeugs 1 vereinfacht durchgeführt werden. In dem Verfahren 10 können zudem die Aktualität und/oder die Kompatibilität der Ladestation 2 überwacht werden, wodurch ein Ausfallen der Ladestation 2 unabhängig von ihrem Standort und ihrer Zugänglichkeit verhindert werden kann.

## Patentansprüche

1. Verfahren (10) zum Steuern einer Ladestation (2) zum Laden von Fahrzeugen (1), wobei beim Laden der jeweiligen Fahrzeuge (1) eine erste Ladeeinheit (3a) der Ladestation (2) mit einer zweiten Ladeeinheit (3b) des jeweiligen Fahrzeugs (1) stromübertragend gekoppelt wird;
**dadurch gekennzeichnet,**
- **dass** beim Laden eines der Fahrzeuge (1) ein Updatevorgang der Ladestation (2) durchgeführt wird, bei dem eine Steuerungsanordnung (6) des einen Fahrzeugs (1) ein aktuelles Softwarepaket (13) an eine Steuerungseinrichtung (5) der Ladestation (2) übermittelt,
- **dass** beim Updatevorgang in dem aktuellen Softwarepaket (13) für die Ladestation (2) eine aktuelle Software vollständig oder ein Änderungspaket einer aktuellen Software zum Aktualisieren von zu aktualisierenden Bestandteilen übertragen wird, und
- **dass** beim Updatevorgang die Steuerungseinrichtung (5) der Ladestation (2) aus dem aktuellen Softwarepaket (13) eine abgespeicherte Software (11) auf die aktuelle Software aktualisiert.

2. Verfahren nach Anspruch 1,
**dadurch gekennzeichnet, dass**
beim Laden der jeweiligen Fahrzeuge (1) die Aktualität einer abgespeicherten Software (11) der Ladestation (2) überprüft wird und bei einer nicht aktuellen abgespeicherten Software (11) der Updatevorgang gestartet wird.

3. Verfahren nach Anspruch 1 oder 2,
**dadurch gekennzeichnet, dass**
beim Updatevorgang das aktuelle Softwarepaket (13) für die Ladestation (2) an die Steuerungsanordnung (6) des einen Fahrzeugs (1) aus einem externen Speicherplatz übertragen wird.

4. Verfahren nach Anspruch 3,
**dadurch gekennzeichnet, dass**
beim Updatevorgang das aktuelle Softwarepaket (13) für die Ladestation (2) von der Steuerungsanordnung (6) des einen Fahrzeugs (1) über ein erstes bevorzugt zum Empfangen und zum Senden von Daten nach einem standardisierten Übertragungsprotokoll ausgelegtes Kommunikationsmodul (7) der Steuerungsanordnung (6) mittels einer bevorzugt nach einem Internetsicherheitsstandard gesicherten Datenverbindung drahtlos empfangen wird.

5. Verfahren nach einem der Ansprüche 1 bis 4,
**dadurch gekennzeichnet, dass**
beim Updatevorgang die Steuerungsanordnung (6) des einen Fahrzeugs (1) das aktuelle Softwarepaket (13) an die Steuerungseinrichtung (5) der Ladestation (2) über ein zweites Kommunikationsmodul (8) der Steuerungsanordnung (6) drahtlos oder per Kabel übermittelt.

6. Verfahren nach Anspruch 5,
**dadurch gekennzeichnet, dass**
- das zweite Kommunikationsmodul (8) das aktuelle Softwarepaket (13) an die Steuerungseinrichtung (5) der Ladestation (2) über eine zum Empfangen und zum Senden von Daten nach einem standardisierten Übertragungsprotokoll ausgelegte Antenne (8a) mittels einer nach einem Internetsicherheitsstandard gesicherten drahtlosen Datenverbindung übermittelt, oder
- das zweite Kommunikationsmodul (8) das aktuelle Softwarepaket (13) an die Steuerungseinrichtung (5) der Ladestation (2) über ein Datenkabel mittels einer standardisierten Datenverbindung übermittelt, oder
- das zweite Kommunikationsmodul (8) das aktuelle Softwarepaket (13) an die Steuerungseinrichtung (5) der Ladestation (2) über die stromführende Verbindung der ersten Ladeeinheit (3a) mit der zweiten Ladeeinheit (3b) übermittelt.

7. Verfahren nach einem der Ansprüche 1 bis 6,
**dadurch gekennzeichnet, dass**
- beim Laden der jeweiligen Fahrzeuge (1) die Steuerungsanordnung (6) des jeweiligen Fahrzeugs (1) einer abgespeicherten Software (11) der Ladestation (2) entsprechende Statusdaten (12) der Ladestation (2) an eine externe Datenbank (9) übermittelt, und
- die Statusdaten (12) der Ladestation (2) in der Datenbank (9) gespeichert werden, und
- die Aktualität und/oder die Kompatibilität der abgespeicherten Software (11) anhand der in der Datenbank (9) abgespeicherten Statusdaten (12) der Ladestation (2) überwacht werden.

8. Verfahren nach Anspruch 7,
**dadurch gekennzeichnet, dass**
- mit den Statusdaten (12) ein Zeitpunkt des letzten Updatevorgangs und/oder eine Softwareversion und/oder ein Ladungsdurchsatz des letzten Ladens und/oder ein Zeitpunkt des letzten Ladens übermittelt werden, und/oder
- beim Überwachen der Aktualität und/oder der Kompatibilität die zeitlich später in der Datenbank (9) gespeicherten Statusdaten (12) der Ladestation (2) die zeitlich früher in der Datenbank (9) gespeicherten Statusdaten (12) der Ladestation (2) ersetzen.

9. Verfahren nach Anspruch 7 oder 8,
**dadurch gekennzeichnet, dass**
- eine Warnmeldung (14) für den Inhaber der Ladestation (2) generiert wird, sobald die abgespeicherte Software (11) der Ladestation (2) nicht mehr aktuell ist, und/oder
- eine Warnmeldung (14) für den Inhaber der Ladestation (2) generiert wird, sobald die abgespeicherte Software (11) der Ladestation (2) mit einer Software aufzuladender beliebiger Fahrzeuge (1b) nach einem kurzen Zeitabschnitt inkompatibel werden kann.

10. Verfahren nach Anspruch 9,
**dadurch gekennzeichnet, dass**
- die Warnmeldung (14) an den Inhaber der Ladestation (2) über eine Anwendungssoftware und/oder über eine Anwendungssoftware (15) für Mobilgeräte (16) und/oder über eine Anzeige einer Steuerungsanordnung eines durch den Inhaber definierten Fahrzeugs (1c) übermittelt wird, und/oder
- die Statusdaten (12) der Ladestation (2) in der Datenbank (9) für den Inhaber zum Abrufen bereitgestellt werden.

11. Verfahren nach einem der Ansprüche 7 bis 10,
**dadurch gekennzeichnet, dass**
die Steuerungsanordnung (6) des jeweiligen Fahrzeugs (1) die der abgespeicherten Software (11) der Ladestation (2) entsprechenden Statusdaten (12) der Ladestation (2) an die Datenbank (9) über ein erstes bevorzugt zum Empfangen und zum Senden von Daten nach einem standardisierten Übertragungsprotokoll ausgelegtes Kommunikationsmodul (7) mittels einer bevorzugt nach einem Internetsicherheitsstandard gesicherten Datenverbindung drahtlos übermittelt.

12. Ladestation (2) zum Laden von Fahrzeugen, wobei die Ladestation (2) eine erste Ladeeinheit (3a) aufweist, die mit einer zweiten Ladeeinheit (3b) des jeweiligen Fahrzeugs (1) stromübertragend koppelbar ist;
**dadurch gekennzeichnet, dass**
eine Steuerungseinrichtung (5) der Ladestation (2) zum Ausführen des Verfahrens (10) nach einem der vorangehenden Ansprüche ausgelegt ist.

13. Ladestation nach Anspruch 12,
**dadurch gekennzeichnet, dass**
- die Ladestation (2) zum induktiven Laden von Fahrzeugen (1) ausgelegt ist, wobei die erste Ladeeinheit (3a) der Ladestation (2) eine Primärspule (4a) ist, die mit der zweiten Ladeeinheit (3b) des jeweiligen Fahrzeugs (1) in Form einer Sekundärspule (4b) stromübertragend induktiv koppelbar ist, oder
- die Ladestation (2) zum Laden von Fahrzeugen (1) per Kabel ausgelegt ist, wobei die erste Ladeeinheit (3a) der Ladestation (2) eine Steckdose oder ein Stecker ist, die oder der mit der zweiten Ladeeinheit (3b) des jeweiligen Fahrzeugs (1) in Form eines Steckers oder einer Steckdose per Kabel stromübertragend koppelbar ist.

14. Fahrzeug (1) mit einem elektrisch aufladbaren Energiespeicher, wobei das Fahrzeug (1) eine zweite Ladeeinheit (3b) aufweist, die mit einer ersten Ladeeinheit (3a) einer Ladestation (2) zum Laden des Energiespeichers stromübertragend koppelbar ist;
**dadurch gekennzeichnet, dass**
eine Steuerungsanordnung (6) des Fahrzeugs (1) zum Ausführen des Verfahrens (10) nach einem der vorangehenden Ansprüche ausgelegt ist.

## Claims

1. Method (10) for controlling a charging station (2) for charging vehicles (1), wherein, when charging the respective vehicles (1), a first charging unit (3a) of the charging station (2) is coupled for power transmission to a second charging unit (3b) of the respective vehicle (1),
**characterised in that**
- when charging one of the vehicles (1), an updating process of the charging station (2) is performed in which a control assembly (6) of the one vehicle (1) transmits a current software package (13) to a control assembly (5) of the charging station (2),
- **in that** in the updating process a current software is transmitted completely or an amendment package of a current software for updating components to be updated is transmitted in the current software package (13) for the charging station (2), and
- **in that** in the updating process the control assembly (5) of the charging station (2) updates from the current software package (13) a stored software (11) onto the current software.

2. Method according to claim 1,
**characterised in that**
when charging the respective vehicles (1), the currency of a stored software (11) of the charging station (2) is checked and the updating process is started if there is a non-current stored software (11).

3. Method according to claim 1 or 2,
**characterised in that**
in the updating process the current software package (13) for the charging station (2) is transmitted to the control assembly (6) of the one vehicle (1) from an external memory location.

4. Method according to claim 3,
**characterised in that**
in the updating process the current software package (13) for the charging station (2) is received in a wireless manner by the control assembly (6) of the one vehicle (1) via a first communication module (7) of the control assembly (6) preferably designed for receiving and sending data in accordance with a standardised transmission protocol by means of a data link preferably secured in accordance with an internet security standard.

5. Method according to any of claims 1 to 4,
**characterised in that**
in the updating process the control assembly (6) of the one vehicle (1) transmits the current software package (13) to the control assembly (5) of the charging station (2) in a wireless manner or using a cable via a second communication module (8) of the control assembly (6).

6. Method according to claim 5,
**characterised in that**
- the second communication module (8) transmits the current software package (13) to the control assembly (5) of the charging station (2) via an aerial (8a) designed for receiving and sending data in accordance with a standardised transmission protocol by means of a data link secured in accordance with an internet security standard, or
- the second communication module (8) transmits the current software package (13) to the control assembly (5) of the charging station (2) via a data cable by means of a standardised data link, or
- the second communication module (8) transmits the current software package (13) to the control assembly (5) of the charging station (2) via the current-carrying connection between the first charging unit (3a) and the second charging unit (3b).

7. Method according to any of claims 1 to 6,
**characterised in that**
- when charging the respective vehicles (1), the control assembly (6) of the respective vehicle (1) transmits status data (12) of the charging station (2), which correspond to a stored software (11) of the charging station (2), to an external database (9), and
- the status data (12) of the charging station (2) are stored in the database (9), and
- the currency and/or the compatibility of the stored software (11) are/ is monitored using the status data (12) of the charging station (2) stored in the database (9).

8. Method according to claim 7,
**characterised in that**
- a time of the last updating process and/or a software version and/or a charge throughput of the last charging process and/or a time of the last charging process are/is transmitted with the status data (12), and/or
- when monitoring the actuality and/or the compatibility, the status data (12) of the charging station (2) which are stored in the database (9) at a later point in time replace the status data (12) of the charging station (2) which are stored in the database (9) at an earlier point in time.

9. Method according to claim 7 or 8,
**characterised in that**
- a warning message (14) is generated for the owner of the charging station (2) as soon as the stored software (11) of the charging station (2) is no longer current, and/or
- a warning message (14) is generated for the owner of the charging station (2) as soon as the stored software (11) of the charging station (2) can become incompatible with a software of any vehicles (1b) to be charged after a short period of time.

10. Method according to claim 9,
**characterised in that**
- the warning message (14) is transmitted to the owner of the charging station (2) via an application software and/or an application software (16) for mobile devices and/or a display of a control assembly of a vehicle (1c) defined by the owner, and/or
- the status data (12) of the charging station (2) are made available to the owner for retrieval in the database (9).

11. Method according to any of claims 7 to 10,
**characterised in that**
the control assembly (6) of the respective vehicle (1) transmits the status data (12) of the charging station (2) which correspond to the stored software (11) in a wireless manner to the database (9) via a first communication module (7) preferably designed for receiving and sending data in accordance with a standardised transmission protocol by means of a data link preferably secured in accordance with an internet security standard.

12. Charging station (2) for charging vehicles, the charging station (2) having a first charging unit (3a), which can be coupled for power transmission to a second charging unit (3b) of the respective vehicle (1),
**characterised in that**
a control assembly (5) of the charging station (2) is designed to carry out the method (10) according to any of the preceding claims.

13. Charging station according to claim 12,
**characterised in that**
- the charging station (2) is designed for the inductive charging of vehicles (1), wherein the first charging unit (3a) of the charging station (2) is a primary coil (4a), which can be inductively coupled for power transmission to the second charging unit (3b) of the respective vehicle (1) in the form of a secondary coil (4b), or
- the charging station (2) is designed for charging vehicles (1) using a cable, wherein the first charging unit (3a) of the charging station (2) is a socket or a plug which can be coupled for power transmission to the second charging unit (3b) of the respective vehicle (1) in the form of a plug or a socket.

14. Vehicle (1) with an electrically chargeable energy store, wherein the vehicle (1) has a second charging unit (3b) which can be coupled for power transmission to a first charging unit (3a) of the charging station (2) for charging the energy store,
**characterised in that**
a control assembly (6) of the vehicle (1) is designed to carry out the method (10) according to any of the preceding claims.

## Revendications

1. Procédé (10) de commande d'une station de charge (2) pour le chargement de véhicules (1), dans lequel un premier module de charge (3a) de la station de charge (2) est couplé par transfert de courant à un second module de charge (3b) du véhicule respectif (1) lors du chargement des véhicules respectifs (1) ; **caractérisé en ce**
- **que** lors du chargement d'un des véhicules (1), un processus de mise à jour de la station de charge (2) est réalisé, lors duquel un agencement de commande (6) du véhicule en question (1) transmet un progiciel à jour (13) à un dispositif de commande (5) de la station de charge (2),
- **que** lors du processus de mise à jour dans le progiciel à jour (13) pour la station de charge (2), un logiciel à jour entièrement ou un package de modification d'un logiciel à jour pour l'actualisation de constituants à actualiser est transféré, et
- **que** lors du processus de mise à jour, le dispositif de commande (5) de la station de charge (2) actualise à partir du progiciel à jour (13) un logiciel mémorisé (11) sur le logiciel à jour.

2. Procédé selon la revendication 1,
**caractérisé en ce que**
lors du chargement des véhicules respectifs (1), l'actualité d'un logiciel mémorisé (11) de la station de charge (2) est contrôlée et en cas de logiciel mémorisé non à jour (11), le processus de mise à jour est démarré.

3. Procédé selon la revendication 1 ou 2,
**caractérisé en ce que**
lors du processus de mise à jour, le progiciel à jour (13) pour la station de charge (2) est transféré à l'agencement de commande (6) du véhicule en question (1) à partir d'un emplacement de mémoire externe.

4. Procédé selon la revendication 3,
**caractérisé en ce que**
lors du processus de mise à jour, le progiciel à jour (13) pour la station de charge (2) est reçu sans fil par l'agencement de commande (6) du véhicule en question (1) par le biais d'un premier module de communication (7) de l'agencement de commande (6) conçu de préférence pour la réception et pour l'envoi de données selon un protocole de transfert standardisé au moyen d'une connexion de données sécurisée de préférence selon une norme de sécurité Internet.

5. Procédé selon une des revendications 1 à 4,
**caractérisé en ce que**
lors du processus de mise à jour, l'agencement de commande (6) du véhicule en question (1) transmet sans fil ou par câble le progiciel à jour (13) au dispositif de commande (5) de la station de charge (2) par le biais d'un second module de communication (8) de l'agencement de commande (6).

6. Procédé selon la revendication 5,
**caractérisé en ce que**
- le second module de communication (8) transmet le progiciel à jour (13) au dispositif de commande (5) de la station de charge (2) par le biais d'une antenne (8a) conçue pour la réception et pour l'envoi de données selon un protocole de transfert standardisé au moyen d'une connexion de données sans fil sécurisée selon une norme de sécurité Internet, ou
- le second module de communication (8) transmet le progiciel à jour (13) au dispositif de commande (5) de la station de charge (2) par le biais d'un câble de données au moyen d'une connexion de données standardisée, ou
- le second module de communication (8) transmet le progiciel à jour (13) au dispositif de commande (5) de la station de charge (2) par le biais de la connexion conductrice du premier module de charge (3a) au second module de charge (3b).

7. Procédé selon une des revendications 1 à 6,
**caractérisé en ce que**
- lors du chargement des véhicules respectifs (1), l'agencement de commande (6) du véhicule respectif (1) transmet des données de statut (12) de la station de charge (2) correspondant à un logiciel mémorisé (11) de la station de charge (2) à une base de données externe (9), et
- les données de statut (12) de la station de charge (2) sont mémorisées dans la base de données (9), et
- l'actualité et/ou la compatibilité du logiciel mémorisé (11) sont surveillées à l'aide des données de statut (12) de la station de charge (2) mémorisées dans la base de données (9).

8. Procédé selon la revendication 7,
**caractérisé en ce que**
- un moment du dernier processus de mise à jour et/ou une version logicielle et/ou un débit de chargement du dernier chargement et/ou un moment du dernier chargement sont transmis avec les données de statut (12), et/ou
- lors de la surveillance de l'actualité et/ou de la compatibilité, les données de statut (12) de la station de charge (2) mémorisées plus tard dans le temps dans la base de données (9) remplacent les données de statut (12) de la station de charge (2) mémorisées plus tôt dans le temps dans la base de données (9).

9. Procédé selon la revendication 7 ou 8,
**caractérisé en ce que**
- un avertissement (14) pour le propriétaire de la station de charge (2) est généré dès que le logiciel mémorisé (11) de la station de charge (2) n'est plus à jour, et/ou
- un avertissement (14) pour le propriétaire de la station de charge (2) est généré dès que le logiciel mémorisé (11) de la station de charge (2) peut être incompatible avec un logiciel de quelconques véhicules (1b) à charger après une courte période.

10. Procédé selon la revendication 9,
**caractérisé en ce que**
- l'avertissement (14) au propriétaire de la station de charge (2) est transmis par le biais d'un logiciel d'application et/ou par le biais d'un logiciel d'application (15) pour appareils mobiles (16) et/ou par le biais d'un affichage d'un agencement de commande d'un véhicule (1c) défini par le propriétaire, et/ou
- les données de statut (12) de la station de charge (2) sont mises à disposition dans la base de données (9) pour consultation par le propriétaire.

11. Procédé selon une des revendications 7 à 10,
**caractérisé en ce que**
l'agencement de commande (6) du véhicule respectif (1) transmet sans fil les données de statut (12) de la station de charge (2) correspondant au logiciel mémorisé (11) de la station de charge (2) à la base de données (9) par le biais d'un premier module de communication (7) conçu de préférence pour la réception et pour l'envoi de données selon un protocole de transfert standardisé au moyen d'une connexion de données sécurisée de préférence selon une norme de sécurité Internet.

12. Station de charge (2) pour le chargement de véhicules (1), dans laquelle la station de charge (2) présente un premier module de charge (3a) qui peut être couplé par transfert de courant à un second module de charge (3b) du véhicule respectif (1) ;
**caractérisée en ce que**
un dispositif de commande (5) de la station de charge (2) est conçu pour la réalisation du procédé (10) selon une des revendications précédentes.

13. Station de charge selon la revendication 12,
**caractérisée en ce que**
- la station de charge (2) est conçue pour le chargement inductif de véhicules (1), dans laquelle le premier module de charge (3a) de la station de charge (2) est une bobine primaire (4a) qui peut être couplée par induction par transfert de courant au second module de charge (3b) du véhicule respectif (1) sous forme d'une bobine secondaire (4b), ou
- la station de charge (2) est conçue pour le chargement de véhicules (1) par câble, dans laquelle le premier module de charge (3a) de la station de charge (2) est une prise femelle ou un connecteur qui peut être couplé(e) par transfert de courant par câble au second module de charge (3b) du véhicule respectif (1) sous forme d'un connecteur ou d'une prise femelle.

14. Véhicule (1) avec un accumulateur d'énergie rechargeable électriquement, dans lequel le véhicule (1) présente un second module de charge (3b) qui peut être couplé par transfert de courant à un premier module de charge (3a) d'une station de charge (2) pour le chargement de l'accumulateur d'énergie ;
**caractérisé en ce que**
un agencement de commande (6) du véhicule (1) est conçu pour la réalisation du procédé (10) selon une des revendications précédentes.
